# EUROPÄISCHE PATENTSCHRIFT

(11) **EP 1 378 467 B1**
(45) Veröffentlichungstag und Bekanntmachung des Hinweises auf die Patenterteilung: **01.02.2006**
(21) Anmeldenummer: 02405531.1
(22) Anmeldetag: 25.06.2002
(51) Int. Cl.: B65G 47/51

(54) **Kettenspeicher sowie Verfahren zum Beladen des Speichers**
Chain buffer conveyor and method of charging the conveyor
Magasin tampon à chaîne et procédé pour charger le magasin

(43) Veröffentlichungstag der Anmeldung: 07.01.2004
(73) Patentinhaber: Rotzinger AG, 4303 Kaiseraugst (CH)
(72) Erfinder: Spetti, Jörg, 79541 Lörrach (DE)
(74) Vertreter: Schwander, Kuno

(56) Entgegenhaltungen:
- EP-A- 0 506 551
- DE-U- 20 012 523
- US-A- 4 168 776
- US-A- 5 615 994
- US-A- 5 788 057

## Beschreibung

Die Erfindung betrifft einen Kettenspeicher sowie ein Verfahren zum Beladen des Kettenspeichers, nämlich einen Kettenspeicher gemäss dem Oberbegriff des Anspruchs 1 und ein Verfahren gemäss dem Oberbegriff des Anspruchs 4. Ein solcher Kettenspeicher ist aus US 5 615 994 A bekannt.

Der Kettenspeicher und das Verfahren können zum Zwischenspeichern von gleichartigen Gegenständen bzw. Produkten eingesetzt werden.

Bei den Gegenständen bzw. Produkten kann es sich beispielsweise um Schokoladentafeln handeln, die von einer Produktionsvorrichtung zu mindestens einer Verpackungsvorrichtung gefördert werden. Die Produkte können jedoch statt aus Schokoladentafeln aus anderen stückförmigen, süssen oder nicht-süssen Nahrungsmitteln, zum Beispiel Gebäckstücken, oder aus Dosen oder sonstigen Behältern mit irgend einer Füllung oder aus Bauteilen für den Maschinenbau, zum Beispiel Kugellagern, bestehen, die zu einer Verpackungsvorrichtung oder sonstigen Bearbeitungsvorrichtung gefördert werden.

Bei bekannten Einrichtungen zur Herstellung und Verpakkung von Schokoladentafeln werden die von einer Produktionsvorrichtung produzierten Tafeln über eine Zufuhrbahn zu einem Kettenspeicher, danach durch diese hindurch zu Verpackungsvorrichtungen transportiert. Der Kettenspeicher dient in diesem Fall als Ausgleichsvorrichtung zum Ausgleichen von Schwankungen der Zufuhrrate von Tafeln oder der Verpackungsrate der Verpackungsvorrichtung sowie von vollständigen, beispielsweise 5 Min. bis 45 Min. dauernden Betriebsunterbrüchen der Produktionsvorrichtung oder der Verpackungsvorrichtung.
Ein derartiger Kettenspeicher besitzt typischerweise 150 bis ungefähr 1200 an zwei endlosen Ketten angehängte Gondeln mit mehreren Tablaren zum Aufnehmen je einer Reihe Tafeln. Jede Kette wird dabei durch mehrere in einem Gestell gelagerte Kettenräder und durch mehrere an vertikal verschiebbaren Schlitten gelagerte Kettenräder umgelenkt und bildet eine Anzahl von Schleifen.

Bei den bekannten Kettenspeichern werden die durch je einen Antriebsmotor angetriebenen Ketten des Belade- und Entladetrums intermittierend bewegt, das heisst diese stehen still, während Produkte an der Beladestation auf die Tablare aufgeladen und an der Entladestation von den Tablaren wieder abgeladen werden. Der Speicher arbeitet dabei nach dem "First-in"/"First-out" Prinzip und erlaubt, Ein- und Auslauf mit verschiedenen Geschwindigkeiten zu betreiben.

So wird zum Füllen des Kettenspeichers eine Ablage-Etage nach der anderen beladen, wozu ein durch einen Steuermechanismus gesteuerter Belademotor den Beladetrum schrittweise an der Beladestation vorbeiführt, während der durch einen Entlademotor steuerbare Entladetrum blockiert ist. Zum Entnehmen von Gegenständen aus dem Speicher wird der Entladetrum schrittweise an der Entladestation vorbeigeführt, so dass die Ablage-Etagen ebenfalls schrittweise entladen werden können.

Durch die Anforderung, immer höhere Kapazitäten zu verwirklichen und insbesondere die Beladefrequenz des Speichers zu erhöhen kommen die Gondeln an den Umlenkrädern vermehrt ins Schaukeln. Dies kann bei einer genügend grossen Taktfrequenz oder Transportgeschwindigkeit zum Aufschaukeln der Gondeln über die gesamte Länge der Kette führen, was im Extremfall zur Folge hat, dass die Güter von den Gondeln abgeworfen werden.

Dieser Nachteil ist dem Fachmann schon seit längerer Zeit bekannt. So offenbart zum Beispiel die US-A 4'813'752 ein Antipendel-System, welches durch ein planetenradartiges Abrollen von Zahnrädern dafür sorgt, dass die Gondeln im Bereich der Umlenkräder senkrecht und starr geführt werden, um dadurch nachteilige Schaukelbewegungen zu vermeiden. In diesem Fall handelt es sich um an den Umlenkrädern und den Gondeln angeordnete Zahnräder, die bei der Umlenkung mit ihren Zähnen ineinandergreifen.

Dieses Antipendel-System hat den Nachteil, dass die Gondeln an den Umlenkrädern so starr geführt werden, dass die auf den Ablage-Etagen befindlichen Güter aufgrund der in diesem Fall nur noch auf sie - und nicht mehr auf die Gondeln - einwirkenden und durch die Umlenkung bedingten Fliehkraft abgeworfen werden können, wenn die Geschwindigkeit, mit welcher die Gondeln um die Umlenkräder geführt werden, einen von der Masse der Güter abhängigen Grenzwert überschreitet.

Der Erfindung liegt nun die Aufgabe zu Grunde, einen Kettenspeicher vorzuschlagen, mit welchem der vorstehend genannte Nachteil mindestens teilweise vermieden werden kann, so dass insbesondere die Beladefrequenz gegenüber den herkömmlichen Kettenspeicher erhöht werden kann.

Diese Aufgabe wird erfindungsgemäss durch einen Kettenspeicher mit den Merkmalen des Patentanspruchs 1 und ein Verfahren gemäss Anspruch 4 gelöst.

Vorteilhafte Ausgestaltungen sind Gegenstand der abhängigen Ansprüche.

Nachfolgend wird anhand der einzigen Figur der Zeichnung ein Ausführungsbeispiel der Erfindung beschrieben.

Der in der Figur dargestellte und als ganzes mit 1 bezeichnete Kettenspeicher besitzt vier obere und vier untere Paare von Umlenkräder, über welche ein aus zwei endlosen Ketten 2 gebildetes Ketten-Paar geführt ist. In der Zeichnung ist vom Kettenpaar und von jedem Radpaar nur eine Kette 2 bzw. nur ein Rad sichtbar, so dass nachfolgend meist nur von einer Kette 2 oder einem Rad die Rede ist. Die oberen Räder sind mit 11 bis 14 und die unteren Räder mit 21 bis 24 bezeichnet. Von diesen Räder werden die beiden Umlenkräder 21 und 24 je durch einen Motor 26 bzw. 27 angetrieben und es sind mit Ausnahme des in der Zeichnung links gezeichneten, äussersten oberen Kettenrades 11 alle oberen und unteren Paare von Umlenkrädern in einem Gestell 3 ortsfest gelagert.

Mit 30 sind die einzelnen der Aufnahme der Gegenstände bzw. Produktreihen dienenden Gondeln bezeichnet. Diese in der Figur nur schematisch angedeuteten Gondeln 30 können beispielsweise mehrere Ablage-Etagen aufweisen. Die Gondeln 30 sind darüber hinaus derart mit zwei Enden an den beiden Ketten 2 hängend befestigt, dass die Ablage-Etagen unabhängig von der Stellung der Ketten 2 stets ihre horizontale Lage beibehalten.

Beim Betrieb des Kettenspeichers 1 wird der in der Figur links dargestellte Beladetrum 4 so angetrieben, dass sich die Ketten 2 von unten nach oben bewegen und der Speicher 1 in Pfeilrichtung 5 beladen wird.

Der Kettenspeicher 1 ist erfindungsgemäss derart ausgebildet, dass er eine Beladekapazität von über 100, beispielsweise 120 bis 150 Tablaren pro Minute erlaubt, ohne dass durch das taktweise Beladen ein nachteiliges Aufschaukeln der Gondeln 30 im hinteren Bereich des Speichers 1 verursacht wird.

Zum Erreichen einer derart hohen Beladekapazität ist der in der Figur links gezeichnete Beladetrum 4 wie folgt ausgestaltet:
- Jede Kette 2 wird im Bereich des Beladetrums 4 um zwei ortsfeste Umlenkräder 15 und 21 sowie über zwei Umlenkräder 11 und 25 geführt, von denen jedes in einem vertikal verschiebbaren Schlitten 40 bzw. 41 frei drehbar gelagert ist, und zwar derart,
   dass die Kette 2 jeweilen vom im ersten Schlitten 40 frei drehbar gelagerten äussersten, oberen Umlenkrad 11 senkrecht nach unten zum ortsfesten Umlenkrad 15 und von dort senkrecht nach oben zum im Gestell 3 ortsfest gelagerten, nächstfolgenden oberen Umlenkrad 12 gelangt,
   dass sie jeweilen vom in Bewegungsrichtung vorletzten unteren ortsfesten Umlenkrad 22 senkrecht nach oben zum Umlenkrad 25 des zweiten Schlittens 41 und von dort senkrecht nach unten zum im Gestell 3 ortsfest gelagerten unteren äussersten Umlenkrad 21 gelangt.
- Die beiden Schlitten 40 und 41 sind über etwa die Hälfte der maximalen Länge des Beladetrums 4 in je einer Schiene 42 bzw. 43 vertikal verschiebbar und zusätzlich über mindestens eine Kette 44 miteinander verbunden, welche um ein im Gestell 3 ortsfest gelagertes oberes Umlenkrad 45 geführt ist.
- Ferner ist das zwischen dem vertikal verschiebbaren, oberen Umlenkrad 11 und dem Umlenkrad 12 angeordnete, ebenfalls ortsfeste Umlenkrad 15 mit einem Ausgleichsmotor 28 versehen, um einerseits die Bewegung der Kette 2 beim Beladen in eine im Bereich des Beladetrums 4 schnelltaktende und eine im übrigen Bereich kontinuierliche oder langsam taktende Kettenbewegung aufzutrennen.

Zwischen den in festen Lagern frei drehbar gelagerten Radpaaren 12, 13 und 14 bzw. 22, 23 und 24 sind noch vier weitere Umlenkräder oder Umlenkrollen vorhanden. Diese sind in einem vertikal verschiebbaren, dritten Schlitten 50 frei drehbar gelagert, wobei der Schlitten 50 in einer vertikalen Schiene 51 geführt ist und wobei auch hier die nicht sichtbare Gegenseite des Schlittens 50 identisch ausgebildet ist.

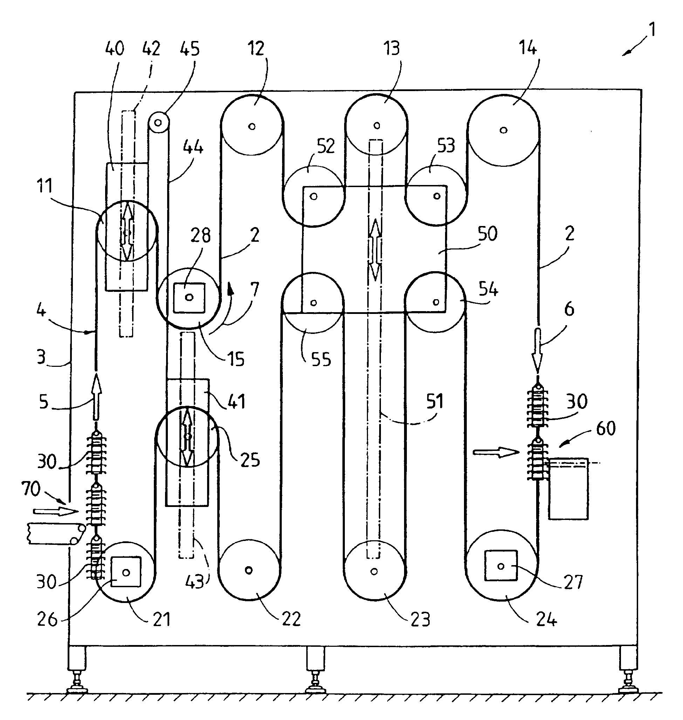

Der Verlauf der Kette 2 im Bereich dieses dritten Schlittens 50 ist aus der Figur 1 gut ersichtlich. Vom oberen Umlenkrad 12 führt sie senkrecht nach unten zum oberen Umlenkrad 52 des Schlittens 50, von dort senkrecht nach oben zum ortsfesten Umlenkrad 13, von dort wieder senkrecht nach unten zum oberen Umlenkrad 53 des Schlittens 50 und von dort wieder nach oben zum ortsfesten Umlenkrad 14. Von dort führt die Kette 2 dann an der Entladestation 60 vorbei zum Umlenkrad 24 und von dort über die unteren Umlenkräder 54 und 55 des Schlittens 50 sowie über die ortsfesten unteren Umlenkräder 23, 22 und 21 zurück zur Beladestation 70.

Zum Füllen des Speichers 1 wird an der Beladestation 70 eine Ablage-Etage nach der anderen beladen, wozu der durch einen Steuermechanismus gesteuerte Motor 26 das Rad 21 schrittweise in Richtung des Pfeiles 5 dreht, während der Entlademotor 27 das Rad 24 blockiert hält. Sobald eine Gondel 30 vollständig beladen ist, kommt es zum sogenannten Gondelsprung, d.h. es wird der Beladetrum 4 um den Abstand zwischen zwei Gondeln 30 nach oben bewegt und die nächste Gondel 30 mit ihrer obersten Ablage-Etage in die Beladeposition gebracht.

Beim Entnehmen der Gegenstände aus dem Speicher 1 wird in analoger Weise der Motor 27 des Rades 24 so in Betrieb gesetzt, dass er den an der Entladestation vorbeilaufende Trum der Kette 2 schrittweise in Pfeilrichtung 6 nach unten zieht, bis jeweils eine Gondel 30 an der Entladestation 60 ankommt. Die Gondeln 30 können sodann nacheinander entladen werden, und zwar so, wie das bereits bei den herkömmlichen Kettenspeichern bekannt ist.

In einer Ausführunsgform des erfindungsgemässen Verfahrens zur Steuerung des Beladevorganges dient der Ausgleichsmotor 28 des ortsfesten Umlenkrades 15 dazu, den bezüglich des Beladetrums 4 hintere Teil der Kette 2 während des schrittweisen Beladens einer Gondel 30 festzuhalten, so dass dadurch ein nachteiliges Aufschaukeln der bereits beladenen Gondeln 30 während des schnell taktenden Beladevorganges über die ganze Länge der Kette 2 verhindert wird.

In einer anderen Ausführungsform des erfindungsgemässen Verfahrens dient der Ausgleichsmotor 28 dazu, den bezüglich des Beladetrums 4 hintere Teil der Kette 2 während des schrittweisen Beladens einer Gondel 30 kontinuierlich anzutreiben, d.h. die Kettenbewegung in diesem Fall in eine von der Beladefrequenz abhängige, schnelltaktende Kettenbewegung des Beladetrums 4 und eine kontinuierliche Bewegung des restlichen Teils der Kette 2 zu trennen. Auch dadurch wird die durch die Taktfrequenz des Beladevorganges bedingte nachteilige Aufschaukel- und Pendelbewegung von bereits beladenen Gondeln 30 verhindert.

Der Kettenspeicher 1 besitzt ferner nicht gezeichnete Steuermittel, die beispielsweise manuell betätigbare Bedienungselemente, elektronisch. Elemente, beispielsweise mindestens einen digitalen Prozessor, Anzeige- und Registriergeräte sowie Datenspeicher sowie eventuell pneumatische und/oder hydraulische Steuerelemente, wie Ventile und dergleichen aufweisen. Elektrische Leitungen und eventuell Fluidleitungen verbinden dabei die Steuermittel mit der Beladestation 70, der Entladestation 60, den Motoren 26 und 27 des Be- und Entaldetrums und mit dem Motor 28 des ortsfesten Umlenkrades 15. Die Steuermittel sind im übrigen derart ausgebildet, dass die Beladung, Zwischenspeicherung und Entladung der Produkte wahlweise mit Hilfe der Bedienungselemente durch mindestens eine Person und/oder mindestens zeitweise automatisch gesteuert werden können.

Nun wird der Betrieb eines in einer Produktionsanlage integrierten Kettenspeichers 1 erläutert. Dabei wird zunächst der im Idealfall stattfindende Idealbetrieb beschrieben. Bei diesem produziert eine Produktionsvorrichtung fortlaufend Gegenstände und führt diese beispielsweise reihenweise und in gleichmässigen Zeitabständen der Beladestation 70 des Kettenspeichers 1 zu.

Wenn der Kettenspeicher 1 beim Start eines Produktionsprozesses leer ist, befinden sich die beiden Schlitten 41 und 50 in ihrer obersten und der Schlitten 40 in seiner tiefsten Vertikalstellung und es wird beim Eintreffen der Gegenstände bei der Beladestation 70 zuerst der Kettenspeicher 1 höchstens teilweise, nämlich ungefähr höchstens zur Hälfte gefüllt. Beim Beladen verschiebt sich dabei - bei blockiertem Umlenkrad 24 - der Schlitten 50 bei jedem Gondelsprung schrittweise oder kontinuierlich vertikal nach unten.

Mittels der beiden Schlitten 40 und 41 und des Ausgleichsmotors 28 des ortsfesten Umlenkrades 15 kann - wie bereits erwähnt - die nachteilige Aufschaukel- und Pendelbewegung von bereits beladenen Gondeln 30 verhindert werden.

Bei der ersten Ausführungsform des erfindungsgemässen Verfahrens blockiert der Antriebsmotor 28 das Umlenkrad 15, so dass der Schlitten 40 vertikal nach oben und der mit diesem gekoppelte Schlitten 41 um die gleiche Höhe vertikal nach unten verschoben werden. Dabei bleibt der in der Zeichnung rechts vom Umlenkrad 15 gezeichnete Teil der Kette 2 stehen, wodurch die nachteilige Aufschaukel- und Pendelbewegung verhindert wird.

Nach dem alle Tablare einer Gondel 30 gefüllt sind und die beiden Schlitten 40 und 41 ihre oberste bzw. unterste Position erreicht haben, wird die nächste Gondel 30 zum Beladen ihres ersten oberen Tablars in Beladeposition gebracht. Während dieses Gondelsprunges wird die Blockierung der Kette 2 am Umlenkrad 15 gelöst und es wird dieses mittels des Ausgleichsmotors 28 zusätzlich so in Pfeilrichtung 7 angetrieben, dass die beiden Schlitten 40 und 41 nach unten bzw. nach oben bewegt werden, so dass sie wieder ihre zum Beladen einer Gondel 30 erforderliche, ursprüngliche untere bzw. obere Ausgangsposition einnehmen und sich der vorstehend beschrieben Beladevorgang wiederholen kann.

Bei dieser ersten Ausführungsform des erfindungsgemässen Verfahrens zum Beladen des Kettenspeichers 1 mit einer gegenüber herkömmlichen Kettenspeichern erhöhten Beladefrequenz wird die Bewegung der Kette 2 im Bereich des Beladetrums 4 in eine schnelltaktende Bewegung des Beladetrums 4 und eine mit dem Gondelsprung synchronisierte, langsam taktende Bewegung des an den Beladetrum anschliessenden Kettenstranges aufgeteilt.

Bei der zweiten Ausführungsform des erfindungsgemässen Verfahrens treibt der Ausgleichsmotor 28 das Umlenkrad 15 während des Beladevorganges zwang weise so gleichförmig an, dass der vom schnelltaktenden Beladetrum 4 entkoppelte Teil der Kette - allenfalls mit Ausnahme des blockierten Entladetrums - kontinuierlich fortbewegt wird, so dass auch in diesem Fall ein durch das Anfahren und Stoppen des Beladetrums 4 bedingtes nachteiliges Aufschaukeln der Gondeln 30 im vom Beladetrum 4 unabhängig bewegten Kettenbereich verhindert wird.

Nach dem der Speicher 1 höchstens zur Hälfte gefüllt ist, wird auch die Entladestation 60 in Betrieb genommen, das heisst es wird die Blockierung des Entladetrums gelöst, so dass kontinuierlich und unterbruchslos Gegenstände an der Beladestation 70 auf die Gondeln 30 aufgeladen und mit einer konstanten Förderrate, die beim Idealbetrieb gleich der Produktionsrate ist, über die Entladestation 60 einer Verpackungsvorrichtung zugeführt werden können. Bei diesem Idealbetrieb ändert sich die Steuerung des Ausgleichsmotors 28 nicht wesentlich vom vorstehend beschriebenen Belademechanismus.

Der vorgängig beschriebene Idealbetrieb kann durch verschiedene Störungen beeinträchtigt werden. Es kann zum Beispiel ab und zu eine der Beladestation 70 zugeführte Produktreihe fehlen. Es kann auch geschehen, dass die Zufuhrrate der dem Speicher 1 zugeführten Gegenstände und die Verpackungsrate der Verpackungsvorrichtung vorübergehend voneinander abweichen. Die Produktionsrate der Produktionsvorrichtung kann zum Beispiel wegen irgend einer kleinen Störung vorübergehend etwas kleiner sein als beim Idealbetrieb, so dass die Zufuhrrate der geförderten Gegenstände kleiner ist als die Verpackungsrate der Verpackungsvorrichtung. Es ist auch möglich, dass die Verpackungsvorrichtung vorübergehend langsamer arbeitet als vorgesehen. Dies kann zum Beispiel geschehen, wenn die zur Verpackungsvorrichtung geförderten Gegenstände ein wenig schief zur Förderrichtung auf der den Speicher 1 verlassenden Abtransportierbahn liegen und dann vor dem Verpacken noch ausgerichtet werden müssen.

In all diesen Fällen können die Steuermittel den Kettenspeicher 1 derart steuern, dass die Gegenstände auf der Abtransportierbahn die für den Idealbetrieb vorgesehenen Abstände haben und in den beim Idealbetrieb vorgesehenen Zeitabständen zur Verpackungsvorrichtung gelangen. Beim automatischen Betrieb bewirken die Steuermittel dabei eine wahlweise unabhängige Verlangsamung, Beschleunigung oder Blockierung des Belade- bzw. Entladevorganges. Ferner steuern die Steuermittel den Ausgleichsmotor 28 des Umlenkrades 15 derart, dass die beiden Schlitten 40 und 41 im einen Fall vor dem Beladen einer Gondel 30 jeweils in ihre Ausgangsposition bewegt werden und im andern Fall beim Beladen einer Gondel 30 möglichst nie ihre vollständig nach oben bzw. unten bewegte Vertikalposition erreichen.

Der erfindungsgemässe Kettenspeicher 1 kann auf verschiedene Arten geändert werden. So können zur Erhöhung der Speicherkapazität mehrere, beispielsweise zwei oder drei hintereinander angeordnete, vertikal verschiebbare Schlitten 50, vorgesehen sein. Ferner können die beiden im Bereich des Beladetrums 4 vorgesehenen Schlitten 40 und 41 auch mittels eines Bandes oder Kabelzuges miteinander gekoppelt sein und es können die Räder 21 und 22 mit den Rädern 11 und 15 vertikal ausgetauscht sein, so dass entsprechenderweise das obere äusserste Umlenkrad des Beladetrums mit einem Antriebsmotor versehen ist, und der Schlitten 40 in der unteren Hälfte und der Schlitten 41 in der oberen Hälfte des Gestells 3 vertikal verschiebbar angeordnet sind.

## Patentansprüche

1. Kettenspeicher mit zwei endlosen Ketten (2), die gemeinsam zur Güteraufnahme dienende Gondeln (30) tragen und durch starr miteinander verbundene Zahn- oder Kettenräder gemeinsam angetrieben werden, wobei jede Kette (2) über obere (11, 12, 13, 14) und untere (21, 22, 23, 24) ortsfeste Umlenkräder geführt ist, wobei an den beiden äussersten Trums der Kette (2) einerseits eine Beladestation (70) und andererseits eine Entladestation (60) vorgesehen sind und wobei dem Be- und Entladetrum je eine Antriebsvorrichtung zugeordnet ist, die jeweils das untere oder obere dem Be- bzw. Entladetrum zugeordnete ortsfeste äusserste Umlenkrad (21, 24) antreibt, **dadurch gekennzeichnet, dass**
- jede Kette (2) im Bereich der Beladestation (70) um zwei ortsfeste Umlenkräder (15, 21) sowie über zwei Umlenkräder (11, 25) geführt ist, von denen jedes in einem vertikal verschiebbaren Schlitten (40, 41) frei drehbar gelagert ist, und zwar derart,
dass die Kette (2) jeweilen vom im ersten Schlitten (40) frei drehbar gelagerten äussersten, oberen (11) oder unteren Umlenkrad senkrecht nach unten bzw. oben zu einem weiteren ortsfesten Umlenkrad (15) und von dort senkrecht nach oben bzw. unten zum nächstfolgenden ortsfest gelagerten, oberen (12) bzw. unteren Umlenkrad gelangt,
dass sie jeweilen vom zweitäussersten unteren (22) bzw. oberen ortsfesten Umlenkrad senkrecht nach oben bzw. unten zum Umlenkrad (25) des zweiten Schlittens (41) und von dort senkrecht nach unten bzw. oben zum ortsfest gelagerten unteren (21) bzw. oberen äussersten Umlenkrad gelangt,
- die beiden Schlitten (40, 41) versetzt übereinander angeordnet und zusätzlich über mindestens eine Kette (44), ein Band oder einen Kabelzug miteinander verbunden sind, welche bzw. welches bzw. welcher um ein ortsfest gelagertes oberes Umlenkrad (45) geführt ist, und
- eine Antriebsvorrichtung vorgesehen ist, um die Bewegung der Kette (2) beim Beladen in eine im Bereich des Beladetrums (4) schnelltaktende und eine daran anschliessende kontinuierliche oder langsam taktende Kettenbewegung aufzutrennen.

2. Kettenspeicher nach Anspruch 1, **dadurch gekennzeichnet, dass** die Antriebsvorrichtung einen Ausgleichsmotor (28) besitzt, der ein ortsfestes Umlenkrad (15) antreiben, blokkieren oder freigeben kann, um die Bewegung der Kette (2) in die im Bereich des Beladetrums (4) schnelltaktende und die daran anschliessende kontinuierliche oder langsam taktende Bewegung aufzutrennen.

3. Kettenspeicher nach Anspruch 1 oder 2, wobei jede Kette (2) über mindestens drei obere (12, 13, 14) und drei untere (22, 23, 24) ortsfeste Umlenkräder sowie über Umlenkräder geführt ist, von denen je zwei (52, 53, 54, 55) übereinander in einem vertikal verschiebbaren weiteren Schlitten (50) frei drehbar gelagert sind, und zwar derart,
dass die Kette (2) jeweilen von einem oberen ortsfesten Umlenkrad (12) senkrecht nach unten zu einem oberen Umlenkrad (52) des Schlittens (50) und von dort senkrecht nach oben zum nächsten ortsfesten oberen Umlenkrad (13) gelangt, und
dass sie jeweilen von einem unteren ortsfesten Umlenkrad (24, 23) senkrecht nach oben zum unteren Umlenkrad (54, 55) des Schlittens (50) und von dort senkrecht nach unten zum nächsten ortsfesten unteren Umlenkrad (23, 22) gelangt.

4. Verfahren zur Steuerung eines Kettenspeichers (1) gemäss Anspruch 2 oder 3 **dadurch gekennzeichnet, dass** der Ausgleichsmotor (28) die Kette (2) so antreibt oder derart von dieser entkoppelt, dass die Bewegung der Kette (2) beim Beladen im Bereich des Beladetrums (4) in eine schnelltaktende und im übrigen Kettenbereich in eine kontinuierliche oder langsam taktende Kettenbewegung aufgetrennt wird, so dass **dadurch** ein nachteiliges Aufschaukeln der Gondeln (30) während des schnelltaktenden Beladevorgangs über die ganze Länge der Kette (2) verhindert wird.

5. Verfahren nach Anspruch 3, **dadurch gekennzeichnet, dass** der Ausgleichsmotor (28) den bezüglich des Beladetrums (4) hintere Teil der Kette (2) während des schrittweisen Beladens einer Gondel (30) durch Blockierung eines ortsfesten Umlenkrades (15) festhält.

6. Verfahren nach Anspruch 3, **dadurch gekennzeichnet, dass** der Ausgleichsmotor (28) während des Beladenvorganges zwangsweise so gleichförmig angetrieben wird, dass der vom schnelltaktenden Beladetrum (4) entkoppelte Teil der Kette (2) allenfalls mit Ausnahme des blockierten Entladetrums kontinuierlich fortbewegt wird.

## Claims

1. Chain storage device having two endless chains (2) commonly carrying gondolas serving for receiving goods and being commonly driven by gear or sprocket wheels being rigidly connected to each other, whereby each chain (2) is guided over upper (11,12,13,14) and lower (21,22,23,24) stationary deflection pulleys, whereby at the two outermost parts of the chain (2) on the one side a loading station (70) and on the other side an unloading station (60) are provided and whereby one driving devices each is associated with the loading and unloading chain part which drives the respective lower or upper outermost stationary deflection pulley (21, 24) associated with the loading and unloading chain part, **characterized in that**
- in the region of the loading station (70) each chain (2) is guided over two stationary deflection pulleys (15,21) as well as over two deflection pulleys (11,25) each of which is born freely rotatable in a vertically movable sled (40,41) in such a way that the chain (2) reaches from the outermost respectively upper (11) or lower deflection pulley born freely rotatably in the first sled (40) vertically downwards or upwards to a further stationary deflection pulley (15) and from there vertically upwards or downwards to the next following stationarily born upper (12) or lower deflection pulley,
- that it reaches from the second outermost respectively lower (22) or upper stationary deflection pulley vertically upwards or downwards to the deflection pulley (25) in the second sled (41) and from there vertically downwards or upwards to the stationarily born outermost lower (21) or upper deflection pulley,
- that the two sleds (40,41) are arranged one above the other and offset to each other and are additionally connected to each other by at least one chain (44), a band or a cable which is guided over a stationarily born upper deflection pulley (45),
- and a driving device is provided to separate the movement of chain (2) into a fast-stepping chain movement in the region of the loading chain part (4) and a subsequent slow-stepping chain movement.

2. Chain storage device according to claim 1, **characterized in that** the driving device is provided with a differential motor (28) which can drive, block or free a stationary deflection pulley (15) for separating the movement of chain (2) into the fast-stepping movement in the region of the loading chain part and the subsequent slow-stepping movement.

3. Chain storage device according to claims 1 or 2, **characterized in that** each chain (2) is guided over at least three upper (12,13,14) and three lower (22,23,24) stationary deflection pulleys as well as over deflection pulleys of which two each (52,53,54,55) are born freely rotatable above one another in a vertically movable sled, such that the chain (2) reaches from an upper stationary deflection pulley (12) vertically downwards to an upper deflection pulley (52) of the sled (50) and from there vertically upwards to the next stationary upper deflection pulley (13), and that it reaches from a lower stationary deflection pulley (24,23) vertically upwards to the lower deflection pulley (54,55) of the sled (50) and from there vertically downwards to the next stationary lower deflection pulley (23,22).

4. Method of controlling a chain storage device (1) according to claims 2 or 3, **characterized in that** the differential motor (28) drives the chain (2) or uncouples from it in such a way that the movement of the chain (2) is separate into a fast stepping movement during loading in the region of the loading part (4) and continuous or slow-stepping chain movement in the remaining chain regions to avoid a disadvantageous increase of rocking of the gondolas (30) during the fast-stepping loading process over the whole length of the chain (2).

5. Method according to claim 4, **characterized in that** the differential motor (28) arrests the with regard to the loading part (4) rear part of the chain (2) by blocking a stationary deflection pulley (15) during the stepwise loading of a gondola (30).

6. Method according to claim 4, **characterized in that** the differential motor (28) is forcibly driven continuously such that the chain (2) part uncoupled from the fast-stepping loading part (4) may be moved continuously with the exception of the blocked unloading chain part.

## Revendications

1. Une station de stockage à chaînes avec deux chaînes en boucle (2), qui portent ensemble des nacelles (30), servant au chargement des marchandises, et qui sont entraînées ensemble par des roues dentées ou à chaîne reliées ensemble de façon rigide, où chaque chaîne (2) est guidée par-dessus des roues de renvoi supérieures (11, 12, 13, 14) et inférieures (21, 22, 23, 24) stationnaires, où sur les deux brins les plus extérieurs de la chaîne (2) sont prévues d'un côté une station de chargement (70) et de l'autre côté une station de déchargement (60) et où un dispositif d'entraînement est affecté et au brin de chargement et au brin de déchargement, qui entraîne à chaque fois la roue de renvoi (21, 24) stationnaire inférieure ou supérieure, la plus extérieure, qui est affectée au brin de chargement resp. de déchargement, **caractérisée en ce que**
- chaque chaîne (2) dans la zone de la station de chargement (70) est guidée par-dessus deux roues de renvoi (15, 21) stationnaires ainsi que par-dessus deux roues de renvoi (11, 25), dont chacune tourne librement et est montée dans un chariot (40, 41), coulissant verticalement, et d'une manière telle,
que la chaîne (2) parvient chaque fois de la roue de renvoi supérieure (11) ou inférieure, la plus extérieure, tournant librement, montée dans le premier chariot (40), verticalement vers le bas resp. vers le haut, jusqu'à une autre roue de renvoi (15) stationnaire et de là continue verticalement vers le haut resp. vers le bas jusqu'à la prochaine roue de renvoie supérieure (12) resp. inférieure montée stationnairement,
qu'elle parvient chaque fois de l'avant-dernière roue de renvoi stationnaire inférieure (22) resp. supérieure par rapport à l'extérieur, verticalement vers le haut resp. vers le bas jusqu'à la roue de renvoi (25) du deuxième chariot (41) et de là continue verticalement vers le bas resp. vers le haut jusqu'à la roue de renvoi inférieure (21) resp. supérieure, la plus extérieure, qui est montée stationnairement
- les deux chariots (40, 41) sont disposés décalés l'un au-dessus de l'autre et sont en plus reliés ensemble par au moins une chaîne (44), une bande ou un câble qui est guidé par-dessus une roue de renvoi (45) supérieure montée stationnairement, et
- un dispositif d'entraînement est prévu afin de séparer le mouvement de la chaîne (2) en un mouvement de chaîne en cadence rapide lors du chargement dans la zone du brin de chargement (4) et par la suite en un mouvement de chaîne continu ou en cadence lente.

2. Une station de stockage à chaînes selon la revendication 1, **caractérisée en ce que** le dispositif d'entraînement comprend un moteur de compensation (28), qui peut entraîner, bloquer ou libérer une roue de renvoi (15) stationnaire, afin de séparer le mouvement de la chaîne (2) en un mouvement en cadence rapide dans la zone du brin de chargement (4) et par la suite en un mouvement continu ou en cadence lente.

3. Une station de stockage à chaînes selon les revendications 1 ou 2, où chaque chaîne (2) est guidée au moins par-dessus trois roues de renvoi supérieures (12, 13, 14) et trois roues de renvoi inférieures (22, 23, 24), stationnaires, ainsi que par-dessus des roues de renvoi, dont deux de chaque (52, 53, 54, 55), l'une au-dessus de l'autre, sont montées en tournant librement dans un autre chariot verticalement coulissant, et de manière telle,
que la chaîne (2) parvient chaque fois d'une roue de renvoi (12) supérieure stationnaire verticalement vers le bas jusqu'à une roue de renvoi (52) supérieure du chariot (50) et de là continue verticalement vers le haut jusqu'à la prochaine roue de renvoi (13) supérieure stationnaire, et
qu'elle parvient chaque fois d'une roue de renvoi (24, 23) inférieure stationnaire verticalement vers le haut jusqu'à une roue de renvoi inférieure (54, 55) du chariot (50) et de là continue verticalement vers le bas jusqu'à la prochaine roue de renvoi (23, 22) inférieure stationnaire.

4. Un procédé pour la commande d'une station de stockage à chaînes (1) selon les revendications 2 ou 3, **caractérisée en ce que** le moteur de compensation (28) entraîne la chaîne (2) ou la découple de telle manière que le mouvement de la chaîne (2) est séparé en un mouvement de chaîne en cadence rapide lors du chargement dans la zone du brin de chargement (4) et en un mouvement de chaîne continu ou en cadence lente dans les autres zones de la chaîne, de façon à éviter un amorçage désavantageux des nacelles (30) pendant le processus de chargement en cadence rapide sur toute la longueur de la chaîne (2).

5. Un procédé selon la revendication 3, **caractérisé en ce que** le moteur de compensation (28) maintient la partie arrière de la chaîne (2), par rapport au brin de chargement (4), pendant le chargement successif d'une nacelle (30) par le blocage d'une roue de renvoi (15) stationnaire.

6. Un procédé selon la revendication 3, **caractérisé en ce que** le moteur de compensation (28) est entraîné obligatoirement de façon uniforme pendant le processus de chargement de manière à ce que la partie découplée de la chaîne (2) du brin de chargement (4) en cadence rapide est avancée de façon continue, au besoin à l'exception du brin de déchargement bloqué.
